# EUROPÄISCHE PATENTSCHRIFT

(11) **EP 0 808 049 B1**
(45) Veröffentlichungstag und Bekanntmachung des Hinweises auf die Patenterteilung: **14.09.2005**
(21) Anmeldenummer: 97101405.5
(22) Anmeldetag: 30.01.1997
(51) Int. Cl.: H04M 1/00

(54) **Bedienteil eines elektrischen Gerätes**
Keyboard for an electrical device
Clavier de commande pour un appareil électrique

(30) Priorität: 14.05.1996 DE 19619337
(43) Veröffentlichungstag der Anmeldung: 19.11.1997
(73) Patentinhaber: ROBERT BOSCH GMBH, 70442 Stuttgart (DE)
(72) Erfinder: Jung, Wolfgang, 63517 Rodenbach (DE)

(56) Entgegenhaltungen:
- EP-A- 0 588 210
- EP-A- 0 623 870
- EP-A- 0 633 684
- US-A- 4 862 498
- US-A- 5 396 264

## Beschreibung

### Stand der Technik

Die Erfindung geht aus von einem Bedienteil eines elektrischen Gerätes nach der Gattung des Hauptanspruchs.

Aus der Zeitschrift "Telenorma Nachrichten", Heft 92, 1988, Seite 28 bis Seite 34 sind verschiedene Typen von Fernsprechapparaten für den ISDN-Anschluß bekannt. Sie verfügen neben dem üblichen Tastenwahlblock über zusätzliche Funktions- und Zielwahltasten. Ein mehrzeiliges, mehrstelliges alphanumerisches Display ermöglicht z. B. die Anzeige der Gebühren oder der Rufnummer eines anrufenden Teilnehmers. Eine wichtige Anwendung ist das sogenannte Editieren, bei dem der Benutzer mit Hilfe des Displays einen ihm zugeordneten Speicherbereich in der ISDN-Ortsvermittlung lesen bzw. verändern kann. In diesem Speicher wird z. B. eine Anrufliste geführt. Über die Funktionstasten sind eine Reihe von Leistungsmerkmalen im Zusammenwirken mit ISDN-Vermittlungsstellen vorgesehen. Mit Hilfe der Zielwahltasten können die Rufnummern von Fernsprechteilnehmern gespeichert und durch Drücken der entsprechenden Zielwahltaste abgerufen werden. Die Funktions- und Zielwahltasten sind dabei fest den entsprechenden Leistungsmerkmalen bzw. Zielfernsprechteilnehmern zugeordnet.

Die US 4 862 498 zeigt eine Vorgehensweise, nach der die von einem Benutzer häufig benutzten Telefonbefehle erfasst werden und die am häufigsten benutzten Befehle auf einem Display eines Endgeräts angezeigt werden.

Auch in der US 5 396 264 wird aus der Häufigkeit der Betätigung verschiedener Befehle eine Prioritätenliste ermittelt, die dem Benutzer angezeigt wird und anhand derer die Häufigkeit, mit der bestimmte Befehle vom Benutzer angewählt werden, dargestellt wird.

### Vorteile der Erfindung

Das erfindungsgemäße Bedienteil mit den Merkmalen des Hauptanspruchs hat dem gegenüber den Vorteil, daß eine flexible Zuordnung der Funktionstasten zu den entsprechenden Funktionsabläufen beziehungsweise Leistungsmerkmalen möglich ist, wobei sich das Bedienteil automatisch an die Gewohnheiten seines Benutzers permanent anpaßt. Auf diese Weise sind die Funktionstasten des Bedienteils permanent benutzerindividuell und -optimal eingerichtet. Dadurch ist in Abhängigkeit des vorhandenen Leistungsumfangs mittels des Bedienteils ein maximaler Bedienungskomfort möglich.

Durch die in den Unteransprüchen aufgeführten Maßnahmen sind vorteilhafte Weiterbildungen und Verbesserungen des im Hauptanspruch angegebenen Bedienteiles möglich.

Vorteilhaft gemäß Anspruch 2 und Anspruch 4 ist die Belegung noch freier bzw. schon belegter Funktionstasten gemäß dem Wunsch des Benutzers nach entsprechender Abfrage mittels der Anzeigevorrichtung. Auf diese Weise ist der Benutzer in den Optimierungsprozeß eingebunden und führt diese Optimierungen nur dann durch, wenn sie ihm als solche erscheinen. Der Benutzer kann also den Optimierungsprozeß beeinflussen.

Vorteilhaft gemäß Anspruch 3 ist die Freigabe von selten benutzten Funktionstasten. Auf diese Weise läßt sich eine bessere Ausnutzung der vorhandenen Funktionstasten erreichen.

Vorteilhaft gemäß Anspruch 6 ist die Erstellung einer Anrufliste, deren Reihenfolge in Abhängigkeit der Wichtigkeit der ankommenden Rufe erstellt wird. Auf diese Weise wird dem Benutzer ein zeitaufwendiges Suchen in der Anrufliste erspart, da die Anrufe bereits der Wichtigkeit nach geordnet sind.

Die gemäß Anspruch 10 beschriebene Schaltungsanordnung stellt eine einfache und wenig aufwendige Möglichkeit zur Realisierung der Komfortoptimierung dar. Dabei werden lediglich Detektoren und Zähler zur Erfassung der vom Benutzer gewählten Funktionsabläufe und/oder Telefonnummern und deren Häufigkeit verwendet, wobei in entsprechenden Auswertern ein Vergleich der Häufigkeit mit einem vorgegebenen Wert stattfindet. Ein Entscheider schlägt dem Benutzer auf der Anzeigevorrichtung schließlich in Abhängigkeit der Auswertung und der durch einen dritten Detektor erfaßten noch nicht belegten Funktions- und/oder Zielwahltasten eine entsprechende Belegung dieser Tasten vor. Eine solche Schaltungsanordnung ist einfach und preisgünstig mit herkömmlichen elektronischen Bausteinen zu realisieren.

Vorteilhaft gemäß Anspruch 11 ist der Anschluß des Bedienteils an ein digitales Telekommunikationsnetz, wobei die Leistungsmerkmale in den digitalen Vermittlungsstellen verfügbar sind. Auf diese Weise läßt sich ein großer Leistungsumfang preisgünstig und platzsparend teilzentral in den Vermittlungsstellen unterbringen, so daß Speicherplatz und Rechenkapazität im Bedienteil eingespart werden können.

Vorteilhaft gemäß Anspruch 12 ist die Verwendung eines Telefonbuchspeichers, der zur Speicherung von vorgebbaren und/oder angewählten Rufnummern dient. Durch die automatische Speicherung der angewählten Rufnummern zusätzlich zu den vom Benutzer vorgegebenen wird eine bessere Ausnutzung des Telefonbuchspeichers erreicht.

Vorteilhaft gemäß Anspruch 13 ist die Speicherung der Anzahl der Verwendung der gespeicherten Rufnummern im Telefonbuchspeicher. Auf diese Weise ist eine einfache Zuordnung der gespeicherten Rufnummern und der Anzahl ihrer Verwendung in einem einzigen Speicher möglich.

Vorteilhaft gemäß Anspruch 14 ist die automatische Aktivierung des elektronischen Schlosses zu dem Zeitpunkt, der vom Benutzer normalerweise für das Abschließen des Bedienteils gewählt wird. Auf diese Weise wird das Bedienteil zu dem normal üblichen Zeitpunkt auch dann abgeschlossen, wenn der Benutzer es vergessen sollte, die Schloßfunktion selbst zu aktivieren. Der Schutz gegen unberechtigtes Benutzen wird daher verbessert.

### Zeichnung

Ein Ausführungsbeispiel der Erfindung ist in der Zeichnung dargestellt und in der nachfolgenden Beschreibung näher erläutert. Es zeigt Figur 1 eine Schaltungsanordnung für ein erfindungsgemäßes als Teilnehmerendgerät ausgebildetes Bedienteil, Figur 2 einen durch die Schaltungsanordnung realisierten Ablaufplan zur optimierten Funktions- und/oder Zielwahltastenbelegung und Figur 3 die Auswahl von Rufnummern eines Telefonbuchspeichers für die Belegung von Zielwahltasten.

### Beschreibung des Ausführungsbeispiels

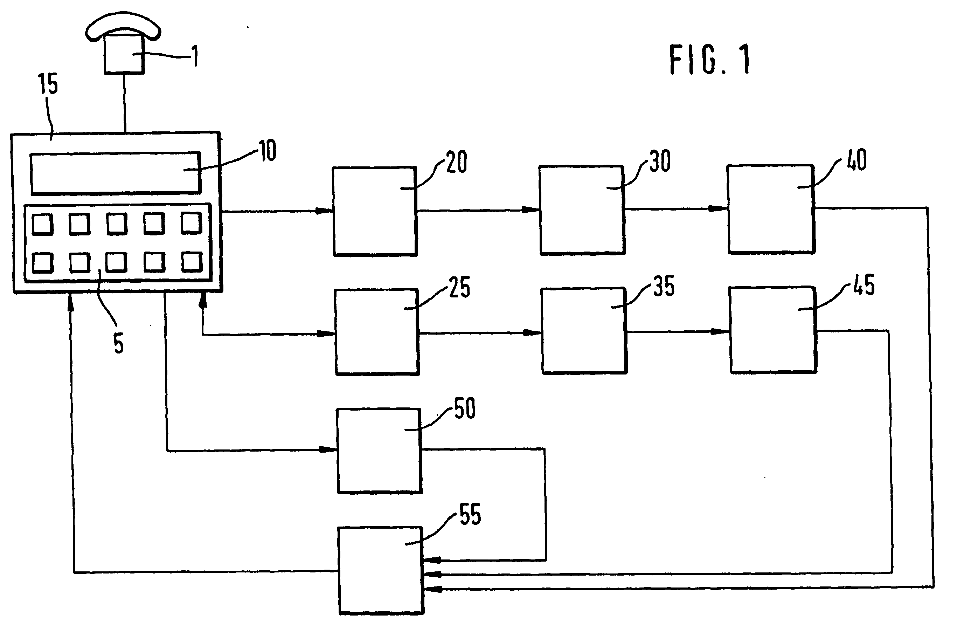

In Figur 1 kennzeichnet 1 ein Teilnehmerendgerät, das mit einem Komfortbedienungsteil 15 verbunden ist. Das Komfortbedienungsteil 15 kann auch im Teilnehmerendgerät 1 integriert sein. Das Komfortbedienungsteil 15 weist eine Anzeigevorrichtung 10 auf, die beispielsweise als mehrzeiliges und mehrstelliges Display ausgebildet sein kann. Sie ermöglicht beispielsweise die Anzeige der Gebühren oder der Rufnummer eines anrufenden Teilnehmers. Das Komfortbedienungsteil 15 ist außerdem mit einem Tastenfeld 5 versehen, das über Funktions- und Zielwahltasten verfügt. Die Funktionstasten dienen dabei der Auswahl von Leistungsmerkmalen, die beim in Figur 1 nicht dargestellten Anschluß des Teilnehmerendgerätes 1 an ein digitales Telekommunikationsnetz, wie beispielsweise bei Nebenstellenanlagen einem ISDN-Netz oder einem IDF-Netz, in der digitalen Ortsvermittlungsstelle verfügbar sein können. Die Zielwahltasten ermöglichen entsprechend ihrer Belegung mit der Rufnummer eines Zielfernsprechteilnehmers eine schnelle und komfortable Anwahl. Mit dem Komfortbedienungsteil 15 ist ein Funktionsdetektor 20 verbunden, der die vom Benutzer gewählten Funktionsabläufe speichert. Mit dem Komfortbedienungsteil 15 ist außerdem ein Rufnummerndetektor 25 verbunden, der die vom Benutzer gewählten Telefonnummern speichert. An den Funktionsdetektor 20 ist ein erster Zähler 30 angeschlossen, der die Häufigkeit der vom Benutzer gewählten Funktionsabläufe erfaßt. An den Rufnummerndetektor 25 ist ein zweiter Zähler 35 angeschlossen, der die Häufigkeit der vom Benutzer gewählten Telefonnummern erfaßt. Dem ersten Zähler 30 ist ein erster Auswerter 40 nachgeschaltet, der die Häufigkeit der vom Benutzer gewählten Funktionsabläufe mit vorgegebenen Werten vergleicht. Dem zweiten Zähler 35 ist ein zweiter Auswerter 45 nachgeschaltet, der die Häufigkeit der vom Benutzer gewählten Telefonnummern mit vorgegebenen Häufigkeiten vergleicht. Mit dem Komfortbedienungsteil 15 ist außerdem ein dritter Detektor 50 verbunden, der zur Erfassung noch nicht belegter Funktions- und Zielwahltasten dient. Der erste und der zweite Auswerter 40 und 45 sowie der dritte Detektor 50 sind mit einem Entscheider 55 verbunden, der ebenfalls an das Komfortbedienungsteil 15 angeschlossen ist. Der Entscheider 55 schlägt in Abhängigkeit der Auswerteergebnisse des ersten und des zweiten Auswerters 40 und 45 und der vom dritten Detektor 50 detektierten noch nicht mit Funktionen belegten Funktions- und Zielwahltasten eine entsprechende Belegung mindestens einer dieser Tasten vor. Dabei kann die Belegung der entsprechenden Taste mit oder ohne Abfrage an den Benutzer erfolgen, wobei zur Abfrage die Anzeigevorrichtung 10 verwendet wird. Findet eine Abfrage mittels der Anzeigevorrichtung 10 an den Benutzer statt, so erfolgt die Belegung noch freier Funktions- und Zielwahltasten entsprechend dem Wunsch des Benutzers. Dieser Wunsch kann durch eine Taste des Tastenfeldes 5 am Komfortbedienungsteil 15 eingegeben werden.

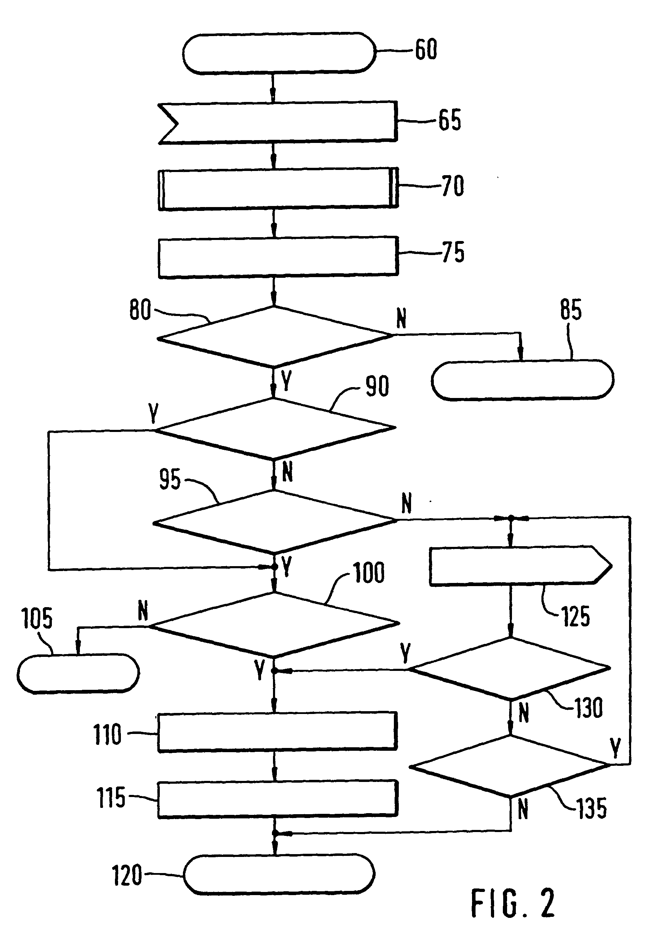

In Figur 2 ist ein Ablaufplan dargestellt, der den Ablauf der Komfortoptimierung bzw. den Selbstlernprozeß des Komfortbedienungsteils 15 beschreibt. Ausgehend von einem Zustand n, der in Figur 2 mit dem Bezugszeichen 60 gekennzeichnet ist, erfolgt von Seiten des Benutzers ein Menüaufruf am Komfortbedienungsteil 15. Die entsprechende Eingabe des Benutzers ist in Figur 2 mit dem Bezugszeichen 65 gekennzeichnet. Bei Programmschritt 70 erfolgt seitens des Benutzers eine menügesteuerte Funktionsauswahl und -ausführung. Dabei wird im Funktionsdetektor 20 der auf diese Weise zustandegekommene Funktionsablauf detektiert und gespeichert. Bei Programmschritt 75 wird im ersten Zähler 30 die Häufigkeit des gewählten Funktionsablaufes durch Inkrementierung des zugehörigen Zählerstandes aktualisiert. Im ersten Auswerter 40 wird dann bei Programmpunkt 80 der Zählerstand mit einer ersten vorgegebenen Häufigkeit verglichen und geprüft, ob die erste vorgegebene Häufigkeit durch den Zählerstand überschritten wird. Ist dies der Fall, so wird zu Programmpunkt 90 verzweigt, andernfalls zu Programmpunkt 85. Programmpunkt 85 stellt den Zustand n+1 dar, von dem aus der bisher beschriebene Programmablauf in gleicher Weise erneut durchgeführt wird. Bei Programmpunkt 90 wird im dritten Detektor 50 geprüft, ob es Funktionstasten gibt, die noch nicht belegt sind. Ist dies der Fall, so wird zu Programmpunkt 100 verzweigt, andernfalls wird bei Programmpunkt 95 fortgefahren. Bei Programmpunkt 100 erfolgt eine Abfrage mittels der Anzeigevorrichtung 10 an den Benutzer, ob eine entsprechende Belegung mindestens einer der noch nicht belegten in Programmschritt 90 vom dritten Detektor 50 erfaßten Funktionstasten erfolgen soll. Entscheidet sich der Benutzer für die Belegung, so wird bei Programmschritt 110 fortgefahren, andernfalls bei Programmschritt 105. Programmschritt 105 kennzeichnet wiederum den Zustand n+1, von dem aus die Optimierung gemäß dem Ablaufplan nach Figur 2 wieder von vorn durchlaufen wird.

Bei Programmpunkt 95 prüft der dritte Detektor 50, ob es mit Leistungsmerkmalen oder Funktionsabläufen belegte Funktionstasten gibt, die nie genutzt werden. Ist dies der Fall, so wird bei Programmpunkt 100 fortgefahren und die Funktionstasten werden als noch nicht belegt gekennzeichnet. Andernsfalls wird bei Programmpunkt 125 fortgefahren. Bei Programmpunkt 125 wird die am seltensten verwendete Funktionstaste als noch nicht belegt gekennzeichnet und zur Belegung mit neuen Funktionsabläufen vorgesehen. Dazu erfolgt eine entsprechende Ausgabe an der Anzeigevorrichtung 10 des Komfortbedienungsteils 15. Bei Programmpunkt 130 wird geprüft, ob der Benutzer mit der Löschung der an der Anzeigevorrichtung 10 angebotenen Funktionstaste einverstanden ist. Ist dies der Fall, so wird zu Programmpunkt 110 verzweigt, andernfalls zu Programmpunkt 135. Entscheidet sich der Benutzer weder in Programmschritt 100 noch in Programmschritt 130 zu einer Neubelegung der entsprechenden Funktionstaste, so wird die Kennzeichnung der Funktionstaste als "noch nicht belegt" wieder aufgehoben und die zugehörige Belegung beibehalten. Bei Programmpunkt 135 wird geprüft, ob dem Benutzer eine Alternative anbietbar ist. Dies kann beispielsweise die am zweitwenigsten verwendete Funktionstaste sein. Ist dies der Fall, so wird wieder zu Programmpunkt 125 verzweigt, andernfalls zu Programmpunkt 120. Bei Programmpunkt 120 wird der Zustand n+1 angenommen, von wo aus der gemäß Figur 2 gegebene Ablaufplan erneut durchlaufen wird. Bei Programmpunkt 110 wird die alte Funktionstastenbelegung gelöscht und die entsprechende Funktionstaste anschließend in Programmpunkt 115 mit dem neuen Funktionsablauf oder Leistungsmerkmal belegt. Anschließend wird zu Programmpunkt 120 verzweigt.

Der beschriebene Ablaufplan gilt entsprechend auch für die Belegung von Zielwahltasten, wobei die gewählten Rufnummern im Rufnummerndetektor 25 detektiert und gespeichert werden, im zweiten Zähler 35 gezählt und die Anzahl ihrer Wahl im zweiten Auswerter 45 mit einer vorgegebenen Häufigkeit verglichen wird. Der dritte Detektor 50 erfaßt dann die noch nicht belegten bzw. selten benutzten Zielwahltasten. An der Anzeigevorrichtung 10 wird dann der Benutzer in analoger Weise zur Belegung der entsprechenden Zielwahltasten um Bestätigung gefragt.

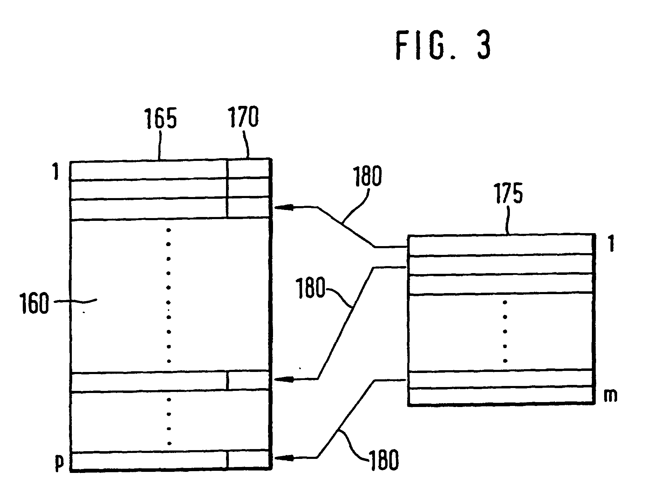

Wenn der Benutzer eine Rufnummer zum ersten Mal wählt, wird sie in einem Telefonbuchspeicher 160 gemäß Figur 3 abgespeichert. Dieser Telefonbuchspeicher 160 ist beispielsweise im Rufnummerndetektor 25 untergebracht. Im Telefonbuchspeicher 160 werden sowohl die gewählten Rufnummern in einem Speicherbereich 165 als auch die zugehörige Anzahl der Wahl dieser Rufnummern in einem Speicherbereich 170 des Telefonbuchspeichers 160 abgespeichert. Der Telefonbuchspeicher 160 besitzt p Speicherplätze für die Rufnummern und die zugehörige Anzahl. In Figur 3 ist auch ein Zielwahltastenspeicher 175 dargestellt, der m Speicherplätze enthält. Die Anzahl der Zielwahltasten ist in der Regel kleiner als die Anzahl der im Telefonbuchspeicher 160 speicherbaren Rufnummern. Die Zielwahltasten werden sinnvollerweise für die am häufigsten gewählten Rufnummern verwendet, um eine einfache und schnelle Anwahl seitens des Benutzers zu ermöglichen. Die vorgegebene Häufigkeit, die Voraussetzung zur Belegung einer Zielwahltaste ist, wird daher sinnvollerweise mit der Häugigkeit gleichgesetzt, die der am seltensten verwendeten Zielwahltaste entspricht. Der Zielwahltastenspeicher 175 enthält für jede belegte Zielwahltaste die Adresse einer im Telefonbuchspeicher 160 abgespeicherten Rufnummer. Die Belegung der Zielwahltasten erfolgt also mit Hilfe von Zielwahltastenzeigern 180 die auf Grund der im Zielwahltastenspeicher 175 abgelegten Adressen auf die entsprechenden Speicherbereiche des Telefonbuchspeichers 160 zeigen. Auf diese Weise müssen im Zielwahltastenspeicher 175 keine Rufnummern sondern nur Adressen gespeichert werden, die weniger Speicherplatz beanspruchen als die Rufnummern. Im Telefonbuchspeicher 160 können zusätzlich zu den Rufnummern auch die zugehörigen Namen und Anschriften der entsprechenden Fernsprechteilnehmer abgespeichert werden. Die Speicherkapazität ist dann entsprechend zu vergrößern.

Die im Telefonbuchspeicher 160 zu speichernden Rufnummern können vom Benutzer mit Hilfe der Tasten des Tastenfeldes 5 vorgegeben werden. In den Telefonbuchspeicher 160 können auch die vom Benutzer für einen Verbindungsaufbau angewählten Rufnummern wie beschrieben automatisch aufgenommen werden.

Ist ein Teilnehmer besetzt oder meldet er sich nicht, wird also ein ankommender Ruf vom Benutzer nicht entgegengenommen, so kann ein Eintrag in eine Anrufliste, die in der ISDN-Ortsvermittlungsstelle vorgesehen ist, veranlaßt werden. Neben der Rufnummer werden auch Datum und Uhrzeit gespeichert. Die ankommenden und vom Benutzer nicht entgegengenommenen Rufe werden somit gemäß der zeitlichen Reihenfolge ihres Eingangs in die Anrufliste eingetragen. Die Anrufliste kann vom angerufenen Teilnehmer ausgelesen und auch gelöscht werden. Dabei wird dem Benutzer auf der Anzeigevorrichtung 10 in Abhängigkeit der Wichtigkeit der ankommenden Rufe die Anrufliste zur Abarbeitung, beispielsweise für einen Rückruf oder einer zu speichernden Notiz, in Verbindung mit einer entsprechenden Funktions- oder Zielwahltaste angeboten. Als Kriterium für die Wichtigkeit eines Anrufs kann dabei die Häufigkeit des Verbindungsaufbaus zwischen dem Anrufer und dem Teilnehmerendgerät 1 verwendet werden. Es ist aber auch denkbar, als Kriterium für die Wichtigkeit eines Anrufs die Unterscheidung zwischen Amtsgesprächen und internen Gesprächen zu verwenden, wenn das Teilnehmerendgerät 1 an eine Nebenstellenanlage angeschlossen ist. Weiterhin kann als Kriterium für die Wichtigkeit eines Anrufs das Bekanntsein der Rufnummer des rufenden Teilnehmers im Teilnehmerendgerät 1, beispielsweise im Telefonbuchspeicher 160, verwendet werden. Die genannten Kriterien können auch in beliebiger Kombination angewendet werden.

Weist das Teilnehmerendgerät 1 ein elektronisches Schloß auf, so erfolgt eine Erfassung des Zeitpunktes der Betätigung des elektronischen Schlosses. Das elektronische Schloß wird dann automatisch zu einem Zeitpunkt aktiviert, der in Abhängigkeit der Erfassung für die Betätigung am wahrscheinlichsten ist, sofern zu diesem Zeitpunkt das elektronische Schloß nicht schon aktiviert ist. Auf diese Weise wird das Teilnehmerendgerät 1 auch dann abgeschlossen, wenn es der Benutzer vergessen sollte. Die beschriebene Verwaltung der Anrufliste und der Schloßfunktion wird durch die Steuerung des Komfortbedienteils 15 realisiert, wobei bezüglich der Anrufliste und der Wahl der Häufigkeit des Verbindungsaufbaus als Kriterium für die Wichtigkeit eines Anrufs die im Telefonbuchspeicher 160 jeweils gespeicherte Anzahl Verwendung finden kann. Wenn der Telefonbuchspeicher 160 im Rufnummerndetektor 25 untergebracht ist, findet daher zwischen Rufnummerndetektor 25 und Komfortbedienungsteil 15 ein bidirektionaler Datenaustausch statt, der in Figur 1 durch einen Doppelpfeil gekennzeichnet ist.

In weiteren Ausführungsbeispielen sind entsprechende Bedienteile auch für andere Anwendungen denkbar, beispielsweise Autoradios, Videorekorder, Computer, u.s.w.

## Patentansprüche

1. Bedienteil (1) eines elektrischen Geräts, insbesondere Teilnehmerendgerät (1) für Telekommunikationsnetze mit einem Funktionstasten aufweisenden Tastenfeld (5) und einer Anzeigevorrichtung (10), **dadurch gekennzeichnet, dass** das Bedienteil derart ausgestaltet ist, dass eine Speicherung der vom Benutzer gewählten Funktionsabläufe stattfindet, eine Erfassung der Häufigkeit der vom Benutzer gewählten Funktionsabläufe stattfindet und bei Überschreiten einer vorgegebenen Häufigkeit und dem Vorhandensein von noch nicht mit Funktionen belegten Funktionstasten eine Belegung mindestens einer dieser Funktionstasten mit dem die vorgegebene Häufigkeit überschreitenden Funktionsablauf erfolgt.

2. Bedienteil (1) nach Anspruch 1, **dadurch gekennzeichnet, daß** eine Abfrage mittels der Anzeigevorrichtung (10) an den Benutzer erfolgt, ob eine entsprechende Belegung mindestens einer der noch nicht belegten Funktionstasten erfolgen soll und daß die Belegung noch freier Funktionstasten entsprechend dem Wunsch des Benutzers erfolgt.

3. Bedienteil (1) nach Anspruch 1 oder 2, **dadurch gekennzeichnet, daß** mindestens eine der am seltensten verwendeten Funktionstasten als noch nicht belegt zu kennzeichnen und zur Belegung mit neuen Funktionsabläufen vorzusehen ist.

4. Bedienteil (1) nach Anspruch 3, **dadurch gekennzeichnet, daß** eine Abfrage mittels der Anzeigevorrichtung (10) an den Benutzer erfolgt, ob eine Neubelegung mindestens einer der belegten Funktionstasten erfolgen soll und daß die Neubelegung von Funktionstasten entsprechend dem Wunsch des Benutzers erfolgt.

5. Bedienteil (1) nach einem der vorhergehenden Ansprüche, **dadurch gekennzeichnet, daß** das Bedienteil ein Teilnehmerendgerät für Telekommunikationsnetze ist, wobei die Funktionstasten des Tastenfeldes (5) zur Aktivierung von Leistungsmerkmalen und/oder Zielwahl dienen.

6. Bedienteil (1) nach Anspruch 5, **dadurch gekennzeichnet, daß** eine Anrufliste vorgesehen ist, in der ankommende und vom Benutzer nicht entgegengenommene Rufe vorzugsweise gemäß der zeitlichen Reihenfolge ihres Eingangs eingetragen werden und daß sie dem Benutzer auf der Anzeigevorrichtung (10) in Abhängigkeit ihrer Wichtigkeit zur Abarbeitung, insbesondere für einen Rückruf, in Verbindung mit einer entsprechenden Funktionstaste angeboten werden.

7. Bedienteil (1) nach Anspruch 6, **dadurch gekennzeichnet, daß** als Kriterium für die Wichtigkeit eines Anrufs die Häufigkeit des Verbindungsaufbaus zwischen dem Anrufer und dem Bedienteil (1) gilt.

8. Bedienteil (1) nach Anspruch 6 oder 7, **dadurch gekennzeichnet, daß** bei Anschluß des Bedienteils (1) an eine Nebenstellenanlage als Kriterium für die Wichtigkeit eines Anrufs die Unterscheidung zwischen Amtsgesprächen und internen Gesprächen gilt.

9. Bedienteil (1) nach Anspruch 6, 7 oder 8, **dadurch gekennzeichnet, daß** als Kriterium für die Wichtigkeit eines Anrufs das Bekanntsein der Rufnummer des rufenden Teilnehmers im Bedienteil (1) gilt.

10. Bedienteil (1) nach einem der Ansprüche 5 bis 9, **dadurch gekennzeichnet, daß** ein Komfortbedienungsteil (15) mit einem Funktionsdetektor (20) und/oder einem Rufnummerndetektor (25) zur Erfassung der vom Benutzer gewählten Funktionsabläufe und/oder Telefonnummern verbunden ist, daß dem Funktionsdetektor (20) und/oder dem Rufnummerndetektor (25) jeweils ein Zähler (30, 35) zur Erfassung der Häufigkeit der gewählten Funktionsabläufe und/oder Telefonnummern nachgeschaltet ist, daß den Zählern (30, 35) jeweils ein Auswerter (40, 45) zum Vergleich der Häufigkeit mit den vorgegebenen Häufigkeiten nachgeschaltet ist, daß ein dritter Detektor (50) zur Erfassung noch nicht belegter und/oder selten benutzter Funktions- und/oder Zielwahltasten mit dem Komfortbedienungsteil (15) verbunden ist, daß den Auswertern (40, 45) und dem dritten Detektor (50) ein Entscheider (55) nachgeschaltet ist, der mit dem Komfortbedienungsteil (15) verbunden ist und in Abhängigkeit der Ergebnisse der Auswerter (40, 45) und der noch nicht belegten Funktions- und/oder Zielwahltasten dem Benutzer eine entsprechende Belegung auf der Anzeigevorrichtung (10) vorschlägt.

11. Bedienteil (1) nach einem der Ansprüche 5 bis 10, **dadurch gekennzeichnet, daß** das Bedienteil (1) an ein digitales Telekommunikationsnetz, insbesondere an ein ISDN-Netz angeschlossen ist, wobei die Leistungsmerkmale in den digitalen Vermittlungsstellen verfügbar sind.

12. Bedienteil (1) nach einem der Ansprüche 5 bis 11, **dadurch gekennzeichnet, daß** ein Telefonbuchspeicher (160) vorhanden ist, der zur Speicherung von vorgebbaren und/oder angewählten Rufnummern dient.

13. Bedienteil (1) nach Anspruch 12, **dadurch gekennzeichnet, daß** im Telefonbuchspeicher (160) eine Speicherung der Anzahl der Verwendung der gespeicherten Rufnummern erfolgt.

14. Bedienteil (1) nach einem der vorherigen Ansprüche, **dadurch gekennzeichnet, daß** das Bedienteil (1) ein elektronisches Schloß aufweist, daß eine Erfassung des Zeitpunktes der Betätigung des elektronischen Schlosses erfolgt und daß eine automatische Aktivierung des elektronischen Schlosses zu einem Zeitpunkt stattfindet, der in Abhängigkeit der Erfassung für die Betätigung am wahrscheinlichsten ist, sofern zu diesem Zeitpunkt das elektronische Schloß nicht schon aktiviert ist.

## Claims

1. Operator control unit (1) of an electrical device, in particular a subscriber terminal (1) for telecommunications networks, having a keypad (5) which has function keys and having a display apparatus (10), **characterized in that** the operator control unit is designed in such a way that the functional sequences which are selected by the user are stored, the frequency of the functional sequences which are selected by the user is detected, and, when a predefined frequency is exceeded and function keys to which functions have not yet been assigned are present, the functional sequence which exceeds the predefined frequency is assigned to at least one of these function keys.

2. Operator control unit (1) according to Claim 1, **characterized in that** the display apparatus (10) asks the user whether at least one of the as yet unassigned function keys should be correspondingly assigned, and **in that** function keys which are still free are assigned in accordance with the wishes of the user.

3. Operator control unit (1) according to Claim 1 or 2, **characterized in that** at least one of the most seldom used function keys can be identified as being as yet unassigned and can be provided for assignment of new functional sequences.

4. Operator control unit (1) according to Claim 3, **characterized in that** the display apparatus (10) asks the user whether at least one of the assigned function keys should be reassigned, and **in that** function keys are reassigned in accordance with the wishes of the user.

5. Operator control unit (1) according to one of the preceding claims, **characterized in that** the operator control unit is a subscriber terminal for telecommunications networks, wherein the function keys of the keypad (5) are used to activate service features and/or speed-dialling.

6. Operator control unit (1) according to Claim 5, **characterized in that** a call log is provided in which incoming calls and calls not taken by the user are preferably entered on the basis of the chronological order in which they were received, and **in that** the said calls are shown to the user on the display apparatus (10) as a function of the importance with which they are to be processed, in particular for a return call, in conjunction with a corresponding function key.

7. Operator control unit (1) according to Claim 6, **characterized in that** the frequency of connection setups between the caller and the operator control unit (1) is a criterion for the importance of a call.

8. Operator control unit (1) according to Claim 6 or 7, **characterized in that**, when the operator control unit (1) is connected to a private branch exchange, the differentiation between external calls and internal calls is a criterion for the importance of a call.

9. Operator control unit (1) according to Claim 6, 7 or 8, **characterized in that** the fact that the operator control unit (1) recognizes the call number of the calling subscriber is a criterion for the importance of a call.

10. Operator control unit (1) according to one of Claims 5 to 9, **characterized in that** a convenience control element (15) is connected to a function detector (20) and/or to a call-number detector (25) in order to detect the functional sequences and/or telephone numbers selected by the user, **in that** a counter (30, 35) for detecting the frequency of the selected functional sequences and/or telephone numbers is connected downstream of the function detector (20) and/or the call-number detector (25) respectively, **in that** an evaluation device (40, 45) for comparing the frequency with the predefined frequencies is connected downstream of each of the counters (30, 35), **in that** a third detector (50) for detecting as yet unassigned and/or seldom used function and/or speed-dialling keys is connected to the convenience control element (15), **in that** a decision-making device (55) is connected downstream of the evaluation devices (40, 45) and said third detector (50), is connected to the convenience control element (15) and suggests, on the display apparatus (10), a corresponding assignment to the user as a function of the results from the evaluation devices (40, 45) and the as yet unassigned function and/or speed-dialling keys.

11. Operator control unit (1) according to one of Claims 5 to 10, **characterized in that** the operator control unit (1) is connected to a digital telecommunications network, in particular to an ISDN network, wherein the service features are available in the digital exchanges.

12. Operator control unit (1) according to one of Claims 5 to 11, **characterized in that** there is a telephone directory memory (160) which is used to store predefinable and/or dialled call numbers.

13. Operator control unit (1) according to Claim 12, **characterized in that** the number of times the stored call numbers have been used is stored in the telephone directory memory (160).

14. Operator control unit (1) according to one of the preceding claims, **characterized in that** the operator control unit (1) has an electronic lock, **in that** the time at which the electronic lock is operated is detected, and **in that** the electronic lock is automatically activated at a time at which operation is most probable as a function of the detection, provided that the electronic lock is not already activated at this time.

## Revendications

1. Elément de commande (1) pour un appareil électrique notamment un terminal d'abonnés (1) d'un réseau de télécommunications comportant un clavier (5) avec des touches fonctionnelles et un dispositif d'affichage (10),
**caractérisé en ce que**
l'élément de commande est réalisé pour enregistrer les opérations fonctionnelles choisies par l'utilisateur, pour saisir la fréquence des opérations fonctionnelles choisies par l'utilisateur et en cas de dépassement d'une fréquence prédéterminée et si des touches fonctionnelles ne sont pas encore occupées par des fonctions, on occupe au moins l'une de ces touches fonctionnelles par l'opération fonctionnelle dont la fréquence dépasse la fréquence prédéfinie.

2. Elément de commande (1) selon la revendication 1,
**caractérisé en ce que**
le dispositif d'affichage (10) interroge l'utilisateur pour lui demander si au moins une touche de fonction non encore occupée doit être occupée et si l'occupation des touches fonctionnelles libres se fait suivant le souhait de l'utilisateur.

3. Elément de commande (1) selon la revendication 1 ou 2,
**caractérisé en ce qu'**
au moins l'une des touches fonctionnelles est moins utilisée et considérée comme non encore occupée et est prévue pour être occupée par de nouvelles opérations fonctionnelles.

4. Elément de commande (1) selon la revendication 3,
**caractérisé en ce que**
le dispositif d'affichage (10) interroge l'utilisateur pour lui demander si au moins l'une des touches fonctionnelles occupées doit être renouvelée et si le renouvellement des touches fonctionnelles correspond au souhait de l'utilisateur.

5. Elément de commande (1) selon l'une des revendications précédentes,
**caractérisé en ce que**
l'élément de commande est le terminal d'abonnés d'un réseau de télécommunications et les touches fonctionnelles du clavier (5) servent à activer les caractéristiques de puissance et/ou la sélection de destination.

6. Elément de commande (1) selon la revendication 5,
**caractérisé par**
une liste d'appels enregistrant les appels entrants et non décrochés par l'utilisateur de préférence suivant l'ordre chronologique de leur arrivée et ils sont présentés à l'utilisateur sur le dispositif d'affichage (10) en fonction de l'importance de leur traitement notamment pour un rappel en liaison avec une touche fonctionnelle correspondante.

7. Elément de commande (1) selon la revendication 6,
**caractérisé en ce que**
le critère de l'importance d'un appel est la fréquence de l'établissement de la liaison entre l'appelant et l'élément de commande (1).

8. Elément de commande (1) selon la revendication 6 ou 7,
**caractérisé en ce que**
en branchant l'élément de commande (1) à une installation accessoire, le critère de l'importance d'un appel est la distinction entre les conversations officielles et les conversations internes.

9. Elément de commande (1) selon les revendications 6, 7 ou 8,
**caractérisé en ce que**
le critère de l'importance d'un appel est la connaissance du numéro d'appel de l'appelant appelant dans l'élément de commande (1).

10. Elément de commande (1) selon l'une des revendications 5 à 9,
**caractérisé par**
une partie de service de confort (15) ayant un détecteur de fonctions (20) et/ou un détecteur de numéros d'appel (25) pour saisir le déroulement des fonctions sélectionnées par l'utilisateur et/ou les numéros de téléphone,
le détecteur de fonctions (20) et/ou le détecteur de numéros d'appel (25) étant suivis respectivement d'un compteur (30, 35) pour saisir la fréquence des déroulements fonctionnels sélectionnés et/ou des numéros de téléphone,
les compteurs (30, 35) étant suivis chacun d'un moyen d'exploitation (40, 45) pour comparer la fréquence à des fréquences prédéfinies,
un troisième détecteur (50) est prévu pour détecter des touches de fonction et/ou de destination non encore occupées et/ou rarement utilisées, ces touches étant reliées à l'élément de commande de confort (15),
les moyens d'exploitation (40, 45) et le troisième détecteur (50) étant suivis d'un moyen de décision (55) relié à l'élément de commande de confort (15) et en fonction des résultats du moyen d'exploitation (40, 45) et des fonctions et/ou des touches de destination non encore occupées, il propose à l'utilisateur une occupation correspondante sur le dispositif d'affichage (10).

11. Elément de commande (1) selon l'une des revendications 5 à 10,
**caractérisé en ce qu'**
il est relié à un réseau de télécommunications numériques notamment un réseau ISDN et les caractéristiques de puissance sont disponibles dans les points de transmission numérique.

12. Elément de commande (1) selon l'une des revendications 5 à 11,
**caractérisé par**
une mémoire de listes téléphoniques (160) servant à mémoriser des numéros d'appels prédéfinis et/ou sélectionnés.

13. Elément de commande (1) selon la revendication 12,
**caractérisé en ce que**
la mémoire de numéros téléphoniques (160) mémorise le nombre d'utilisations des numéros d'appels mémorisés.

14. Elément de commande (1) selon l'une des revendications précédentes,
**caractérisé en ce que**
l'élément de commande (1) comporte une serrure électronique,
l'instant d'actionnement de la serrure électronique étant saisi, et
la serrure électronique est activée automatiquement à l'instant le plus probable en fonction de la saisie de l'actionnement dans la mesure où à cet instant la serrure électronique n'est pas déjà activée.
